Europäisches Patentamt

European Patent Office

Office européen des brevets

(11) Veröffentlichungsnummer: **0 001 216**
B1

(12) **EUROPÄISCHE PATENTSCHRIFT**

(21) Anmeldenummer: **78100721.6**

(22) Anmeldetag: **22.08.78**

(51) Int. Cl.³: **B 23 K 26/08, H 01 S 3/095**

(54) **Einrichtung zum Bearbeiten, insbesondere Schneiden von Werkstücken mittels eines Laserstrahles.**

(30) Priorität: **16.09.77 DE 2741737**

(43) Veröffentlichungstag der Anmeldung:
**04.04.79 Patentblatt 79/7**

(45) Bekanntmachung des Hinweises auf die Patenterteilung:
**11.02.81 Patentblatt 81/6**

(84) Benannte Vertragsstaaten:
**BE CH FR GB SE**

(56) Entgegenhaltungen

ELEKTROTECHNIK, vol. 57, no. 11,
5. Juni 1975,
Würzburg (DE)
Anonym Artikel: "Design-Preis für
$CO_2$-Laser-Ferranti MF 400" Seite V.

WELDING AND METAL FABRICATION, vol. 41,
September 1973,
Sussex (GB)
M. J. FLETCHER: "High power laser
cutting of metals", Seiten 308—311

(73) Patentinhaber: **MESSER GRIESHEIM GMBH**
**Patentabteilung Hanauer Landstrasse 330**
**D-6000 Frankfurt/Main (DE)**

(72) Erfinder: **Herbrich, Horst**
**Augrabenweg 18**
**D-6230 Frankfurt/M. 80 (DE)**

# Einrichtung zum Bearbeiten, insbesondere Schneiden von Werkstücken mittels eines Laserstrahles

Die vorliegende Erfindung betrifft eine Einrichtung zum Bearbeiten, insbesondere Schneiden von Werkstücken mittels eines Laserstrahles mit einem Lasergenerator, der mittels einer Führungsmaschine in zwei Koordinatenrichtungen über dem Werkstück verfahrbar ist.

Mit diesem Oberbegriff wird auf einen Stand der Technik bezug genommen, wie er beispielsweise aus der DT—OS 2 536 573 bekannt geworden ist. Bei den bekannten Einrichtungen dieser Art wird in der Regel ein $CO_2$— Materialbearbeitungslaser ähnlich einem Autogen- oder Plasmaschneidbrenner auf eine Standard-Koordinaten-Führungsmaschine befestigt und über dem ruhenden Werkstück beim Ausschneiden von Werkstücken entsprechend der gewünschten Werkstückform bewegt. Diese Betriebsweise hat gegenüber stationär betriebenen Lasern eine Reihe von Vorteilen, wie beispielsweise beliebig große und schwere Werkstücke bearbeitet werden können, und ferner eine konstante Bearbeitungsleistung im gesamten Schneidbereich vorhanden ist.

Die bisher bekannt gewordenen $CO_2$-Materialbearbeitungslaser arbeiten nach dem Gaslaserprinzip, wobei durch ein Laserentladungsrohr kontinuierlich Lasergas geführt wird, das aus einer Gasversorgungseinrichtung entnommen und nach Durchführung durch die Laserentladungsröhre ganz oder teilweise in die Atmosphäre abgeblasen wird. Bei diesem Laserprinzip sind pro Meter Laserentladungsröhrenlänge Laserausgangsleistungen in der Größenordnung von 50 bis 80 Watt erreichbar. Diese geringe Laserausgangsleistung ist jedoch für Schneidzwecke nicht ausreichend.

Aus diesem Grunde werden $CO_2$-Gaslaser mit mehreren Laserentladungsröhren ausgeführt, d.h. die aktive Länge der Gesamtlaserentladungsstrecke beträgt mehrere Meter. Aus Platzgründen ist dabei das Laserentladungsrohr nicht einstückig, also beispielsweise in Form einer Glasröhre mit einer Länge von 10 oder 12 Metern ausgebildet, sondern vielmehr besteht die Laserentladungsstrecke aus einer Vielzahl von kürzeren, beispielsweise ein bis zwei Meter langen Glasröhr en, die über Umlenkköpfe mit entsprechenden Spiegeln optisch miteinander gekoppelt sind. Diese Anordnung wird auch als gefaltete Bauweise bezeichnet. Bei einem beispielsweise aus der Zeitschrift "Elektrotechnik", vol. 57, no. 11, vom 5. Juni 1975, Seite V, bekannten Laser dieser Art sind bei der Verwendung von zwölf Rohren mit einer Länge von ca. 1 Meter, 450 Watt Ausgangsleistung erreichbar. Der Unterschied zwischen der theoretisch möglichen Laserausgangsleistung 12 x 50—80 Watt = 600—900 Watt gegenüber der erreichten 450 Watt ergibt sich großenteils durch den Verlust, welcher durch die Umlenkung und Umspiegelung bedingt ist. Zur Erzielung von höheren Laserausgangsleistungen, größer 450 Watt, ist es wohl denkbar, weitere Laserentladungsröhren mit entsprechenden Umlenkungen vorzusehen. Dies hat jedoch den Nachteil, daß einerseits der dann entstehende Laser eine große Raumform aufweist, was wiederum bezüglich einer Anordnung auf eine Führungsmaschine ungünstig ist und andererseits die Bedienung und Einstellung sowie die Herstellung und Montage des gesamten Lasers verkompliziert.

Neben diesen $CO_2$-Gaslasern mit niedriger Ausgangsleistung sind darüber hinaus beispielsweise durch die Zeitschrift "Welding and Metal Fabrikation", vol. 1—3, 41, September 1973, Seite 308—309, Artikel "High Power Laser Cutting of Metals", $CO_2$-Gaslaser mit hoher Ausgangsleistung bekannt geworden, bei denen die Laserentladungsrohre in einen Lasergaskreislauf angeordnet sind, der durch eine Lasergastransporteinrichtung (Gasgebläse) aufrechterhalten wird. Diese Laser werden als Gastransportlaser bezeichnet. Der in dem Artikel beschriebene Gastransportlaser ist stationär angeordnet. Zum Bearbeiten von Werkstücken muß das Werkstück selbst bewegt werden. Diese Bearbeitungsmethode ist jedoch auf relativ kleine, leichte Werkstücke beschränkt.

Zur Vermeidung dieses Nachteils wird in dem Artikel vorgeschlagen, bei stationärem Gastransportlaser und stationärem Werkstück den Laserbearbeitungsstrahl über eine Spiegelumlenkung/Spiegelverschiebung zu bewegen. Bei einer derartigen Laserstrahlführung treten jedoch u.a. Änderungen des Laserbrennfleckdurchmessers und damit der Laserleistungsdichte auf, so daß keine konstante Bearbeitungsleistung erreichbar ist.

Aufgabe der vorliegenden Erfindung ist es daher, eine Einrichtung der eingangs genannten Art zu schaffen, mittels der beliebig große und schwere Werkstücke mit einem bewegten Laserstrahl hoher Laserleistung bearbeitet werden können und wobei die Bearbeitungsleistung während der Laserstrahlführung konstant bleibt.

Zur Lösung dieser Aufgabe wird bei einer Einrichtung zum Bearbeiten, insbesondere Schneiden eines Werkstückes mittels eines Laserstrahles, mit einem Lasergenerator, der mittels einer Führungsmaschine in zwei Koordinatenrichtungen über dem Werkstück verfahrbar ist, gemäß der Erfindung vorgeschlagen, daß der Lasergenerator als Gastransportlaser ausgebildet und als verfahrbares Bearbeitungswerkzeug an der Führungsmaschine befestigt ist.

Bevorzugt ist dabei der Gastransportlaser in Leichtbauweise ausgebildet. Durch die Erfindung wird es vorteilhaft möglich, beliebig große und schwere Werkstücke mit einem Laserstrahl hoher Leistung zu bearbeiten, und zwar mit konstanter Bearbeitungsleistung. Die Leichtbauweise ergibt dabei weiterhin den Vorteil, daß der Gastransportlaser bei einer Laserleistung größer 750 Watt ein Gewicht von maximal 300 kg aufweist. Dieses Gewicht kann ohne weiteres von einer herkömmlichen Standardkoordinatenführungsmaschine, wie sie beispielsweise von der Anmelderin unter der Bezeichnung 'Multisec' vertrieben wird, aufgenommen werden, ohne daß zusätzliche Änderungen in der Konstruktion notwendig sind. Dadurch ist es ferner möglich geworden, den erfindungsgemäßen Laser als Werkzeug anstelle des sonst üblichen Autogen- oder Plasmaschneidbrenners zu verwenden und hierfür die gleichen Koordinatenführungsmaschinen einzusetzen. Von wesentlichem Vorteil ist dabei, daß mit diesem Leichtlaser Leistungen größer 750 Watt erreicht werden. Dies ist insbesondere darauf zurückzuführen, daß der Laser als Gastransportlaser, vorzugsweise Axialstrom — $CO_2$ — Gastransportlaser ausgebildet ist. Bei diesem Laser wird im Gegensatz zu den eingangs beschriebenen $CO_2$-Gaslasern das Lasergas in einem Kreislauf den Laserentladungsröhren zugeführt, wobei die Menge des zugeführten Gases wesentlich größer ist als bei den eingangs beschriebenen $CO_2$-Lasern mit offenem Gaskreislauf.

Durch den erhöhten Gasdurchsatz ist es möglich geworden, die Länge der Laserentladungsröhren zu verkürzen, so daß nunmehr Entladungsrohrlängen von 4 m bei einem Gasdurchsatz von 2000 m³/Std. und eine erreichbare Laserleistung von 1000 Watt verwendbar sind. Der Axialstrom-Gastransport-$CO_2$-Laser ist im Hindblick auf eine stabile und kompakte Konstruktion des Laserstrahlgenerators von besonderem Vorteil.

In vorteilhafter Weiterbildung der Erfindung wird vorgeschlagen, daß das zum Gastransport vorgesehene Gebläse als Rootsgebläse ausgebildet ist, dessen Drehzahl/Gewichtsverhältnis vorzugsweise im Bereich von 45 : 1 bis 60 : 1 liegt bei einem Schöpfvolumen des Gebläses von etwa 0,3 bis 0,4 m³. Hierzu ist die Pumpe bevorzugt in Leichtbauweise unter Verwendung von Leichtmetallen ausgebildet. Zur Geräuschdämpfung kann bevorzugt das Rootsgebläsegehäuse doppelwandig ausgebildet sein, wobei vorteilhaft die entsprechende Kammer wassergekühlt ist. Dabei kann als Kühlmittel das Kühlwasser der Entladungsrohre mitverwendet werden. Selbstverständlich ist auch anstelle eines Rootsgebläses ein Radialgebläse verwendbar. Um zu vermeiden, daß die von dem Gebläse (Rootsgebläse) erzeugten Frequenzen (die Drehzahl — abhängig sind und in der Größenordnung von 50 bis 60 Hz liegen) auf die Laserspiegel und auch das Lasergas innerhalb der Laserentladungsröhren übertragen werden und dort ein Schwingen der Laserspiegel bewirken, wird gemäß der Erfindung vorgeschlagen, daß das Rootsgebläse über eine schwingungsgedämpfte Gaskupplung sowie schwingungsdämpfende Leitungen an die Laserentladungsröhre angeschlossen ist. Damit wird verhindert, daß Schwingungen der Laserspiegel sowie der Lasergassäule auftreten und Modulationen des Laserstrahls die Laserausgangsleistung sowie das Bearbeitungsergebnis negativ beeinflussen.

In vorteilhafter Weiterbildung wird hierzu vorgeschlagen, daß das Rootsgebläse über Schwingungsdämpfer in dem Lasergehäuse befestigt ist. Somit werden auch Schwingungen der gesamten Pumpe nicht auf die Lasergassäule bzw. das Laserentladungsrohr bzw. die Laserentladungsrohre übertragen und ungünstige Resonanzen vermieden.

Der Anschluß der äußeren Gaszuführungsleitung ist ebenfalls schwingungsgedämpft durch Verwendung von weichmacherfreien elastischen Kunststoffschläuchen, die außerdem elektrisch isolierende Eigenschaften besitzen, da sie um ein bestimmtes Maß länger sind als eine einzelne Entladestrecke (Laserplasmarohr).

Der Gastransportlaser ist, wie erwähnt, als Konstruktion in Leichtbauweise ausgeführt, wobei bevorzugt die Aufnahme und Befestigung der Laserentladungsrohre über eine Leichtmetallgitterkonstruktion erfolgt. Dadurch wird einerseits eine dauerstabile Laserausgangsleistung garantiert und zum anderen, das gemäß der Erfindung vorgeschlagene Verhältnis von Laserleistung zu Gewicht, in besonders günstiger Weise erreicht.

In der nachfolgenden Beschreibung wird die Erfindung unter Bezugnahme auf die Zeichnungen sowie unter Hinweis auf weitere vorteilhafte Merkmale näher erläutert. Dabei veranschaulicht

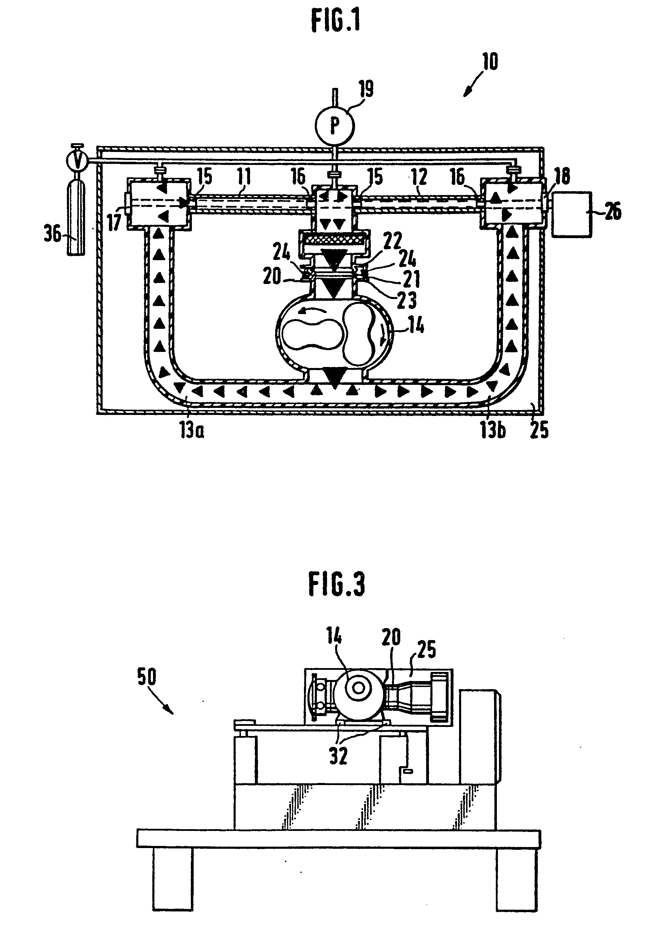

Fig. 1 eine schematische Darstellung des erfindungsgemäßen Gastransportlasers

Fig. 2,

Fig. 3 und

Fig. 4 den Laser nach Fig. 1 montiert auf eine Führungsmaschine,

Fig. 5 die Halterung der Laserentladungsrohre des Lasers nach den Fig. 1 bis 4.

In Fig. 1 ist der schematische Aufbau eines mit 10 bezeichneten Axialstrom — Gastransport — $CO_2$ — Lasers veranschaulicht. Der Laser 10 besteht im wesentlichen aus einer die Laserentladungsrohre 11, 12 beinhaltenden Ringleitung 13 a, 13 b für das Lasergas, welche an einem Gebläse 14 angeschlossen sind, so daß zwei Teilringleitungen gebildet werden. Den Laserentladungsrohren 11, 12 sind Ringelektroden oder Stiftelektroden 15, 16 zugeordnet, welche mit einer nicht näher dargestellten Hochspannungsgleichstomquelle in Verbindung stehen. Die Laserspiegel sind mit 17 und 18 bezeichnet. Den Ringleitungen 13 a, 13 b wird kontinuierlich eine geringe Menge Lasergas (Helium — Stickstoff — Kohlendioxid — Gemisch) zugeführt. Zur Aufrechterhaltung des geringen Drucks innerhalb des Gesamtsystems, ca. 30 mbar, sind die Ringleitungen 13 a, 13 b mit einer Vakuumpumpe 19 verbunden. Das Gebläse 14 ist als Rootsgebläse ausgebildet und direkt an die Laserentladungsrohre angeschlossen.

Das Schöpfvolumen der Pumpe beträgt beim Ausführungsbeispiel 0,3566 m³, die Drehzahl 5680 min⁻¹, das Gewicht 109 kg und die Leistungsaufnahme 3 KW.

Dabei ist, wie aus Fig. 1 zu ersehen ist, zum Anschluß eine schwingungsgedämpfte Gaskupplung 20 vorgesehen. Die Gaskupplung 20 weist neben dem Dehnungsbalg 21, welcher selbstverständlich gasdicht ist und über Flansche 22 und 23 mit Laser bzw. mit Gebläse in Verbindung steht, Dämpfungsglieder auf, die vorzugsweise einstellbar sind. Diese Schwingungsdämpfglieder können beliebig ausgebildet werden, beispielsweise als entsprechend dimensionierte Federn oder Federbälge. Wie aus der Zeichnung hervorgeht, sind dabei die Dämpfglieder 24 ebenfalls mit den Flanschen 22 und 23 verbunden. Bevorzugt sind dabei die Dämpfglieder 24 radial gleichmäßig am Umfang vorgesehen, wobei bevorzugt mindestens drei Dämpfglieder 24 angeordnet sind. Durch diese Maßnahme wird erreicht, daß keine Schwingungen auf die Laserspiegel und die Lasergassäule innerhalb der Rohre 11 und 12 moduliert werden.

Die Ringleitungen 13 a, 13 b sind bevorzugt aus weichmacherfreiem Kunststoff gefertigt, weisen zumindest teilweise Federbalgform auf und haben eine Länge, die größer ist als die Länge eines Entladungsrohres 11 bzw. 12. Durch die Gaskupplung und die schwingungsgedämpften Ringleitungen ist der Laser schwingungsmäßig entkoppelt.

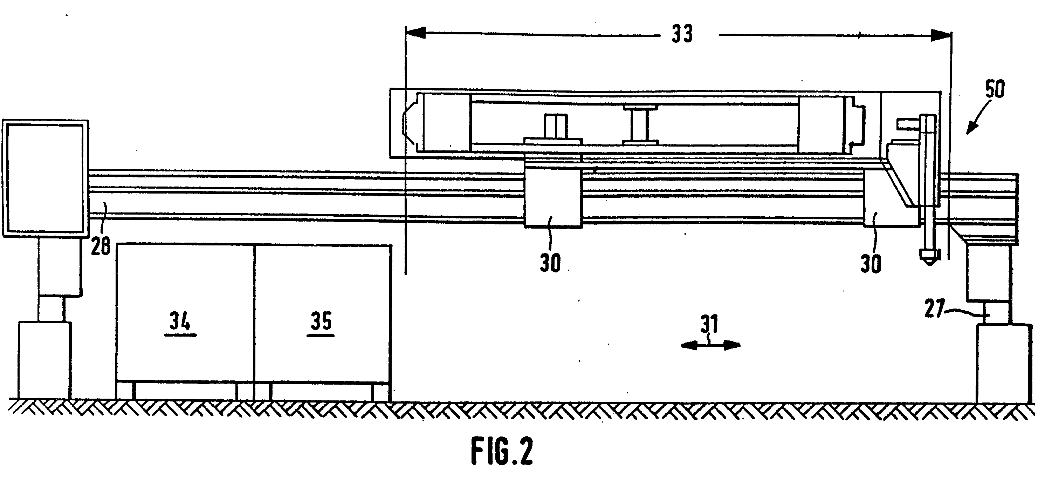

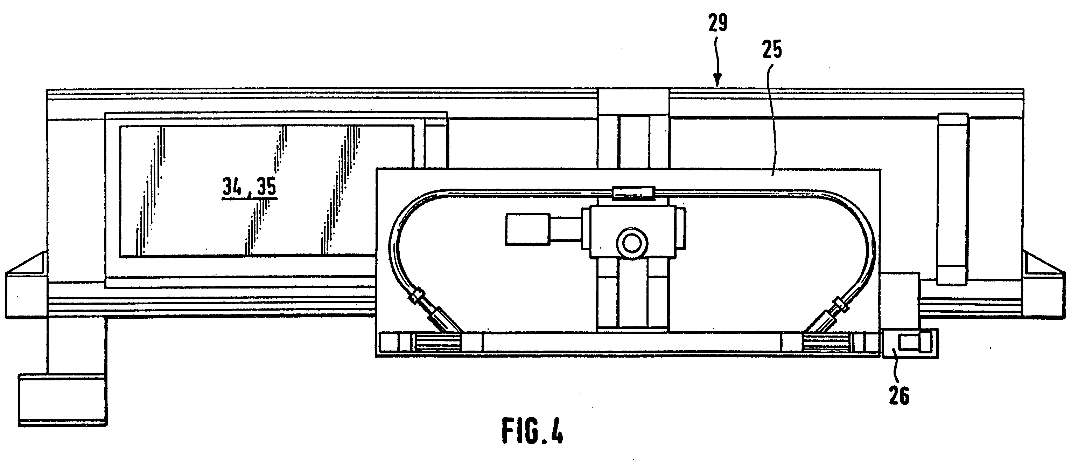

Wie Fig. 1 ferner zeigt, ist der Lasergenerator, welcher im wesentlichen aus den Laserentladungsrohren 11, 12 mit zugeordneten Spiegeln und elektrischen Anschlüssen sowie Gasanschlüssen besteht und das als Rootsgebläse ausgebildete Gebläse 14 als Baueinheit ausgebildet und in einem gemeinsamen Gehäuse 25 angeordnet. An der Baueinheit 25 ist ein Schneidkopf 26 befestigt, in welchem über Spiegel und weitere optische Einrichtungen der Laserstrahl auf das zu bearbeitende Werkstück fokusiert wird. Die Baueinheit 25 mit dem Schneidkopf 26 ist bevorzugt als Schneidwerkzeug an einer Standardkoordinatenführungsmaschine befestigt. Diese Anordnung ist in den Fig. 2, 3 und 4 dargestellt, wobei die Fig. 2 die Vorderansicht, Fig. 3 die Seitenansicht und Fig. 4 die Draufsicht veranschaulicht. Wie aus den Fig. 2 bis 4 hervorgeht, weist die Führungsmaschine einen auf Fahrbahn 27 in Pfeilrichtung 29 verfahrbaren Laufwagen 28 auf, an welchem ein Querlaufwagen 30 befestigt ist, der in Doppelpfeilrichtung 31 bewegbar ist. Der Querlaufwagen 30 ist dabei zweistückig ausgebildet und weist nicht näher dargestellte Antriebsaggregate auf. Diese Antriebsaggregate sowie die Antriebsaggregate zur Bewegung des Längswagens in Doppelpfeilrichtung 29 sind mit einer nicht näher dargestellten Koordinatensteuerung (fotoelektrische Steuerung oder Numerik — Steuerung) verbunden.

Wie insbesondere die Fig. 3 veranschaulicht, ist innerhalb der Baueinheit 25 das Rootsgebläse 14 über Schwingungsdämpfer 32 befestigt. Diese Schwingungsdämpfer bestehen beispielsweise aus Continental "Schwingmetallen".

Die Koordinatenführungsmaschine nach den Fig. 2 bis 4 ist, wie ersichtlich, in Portalbauweise ausgeführt, wobei der Schneidbereich in Doppelpfeilrichtung 31 sich innerhalb des mit 33 bezeichneten Bereiches befinden kann. Seitlich dieses Bereiches sind unterhalb des Längswagens 28 die Versorgungseinheiten 34 und 35 stationär vorgesehen.

Dabei sind innerhalb der Versorgunseinheiten 34, 35 die Transformatoren für die Elektroversorgung des Lasergenerators sowie die Vakuumpumpe 19 und die Gasversorgung 36 vorgesehen.

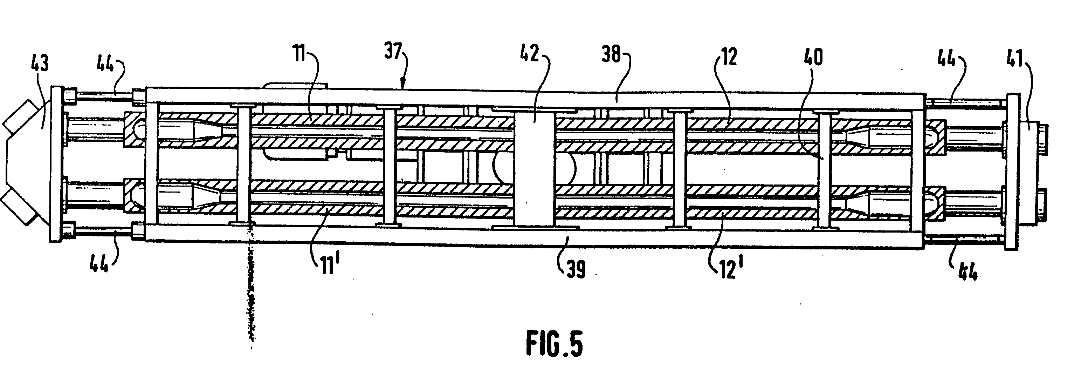

Die in den Fig. 1 bis 4 varanschaulichten Laserentladungsrohre 11, 12 sind, wie aus Fig. 5 hervorgeht, innerhalb einer Leichtmetallgitterkonstruktion gehalten, die in ihrer Gesamtheit mit 37 bezeichnet ist. Die Konstruktion 37 besteht im wesentlichen aus einer oberen und unteren Halteplatte 38, 39, die über Zwischenstege 40 miteinander verbunden sind. Durch dies Ausbildung wird eine besonders einfache und leichte sowie formstabile Laserhalterung erreicht. Die Laserentladungsrohre 11, 12 sowie 11- 12- (beim Ausführungsbeispiel sind vier Entladungsrohre von ca. 1 m vorgesehen) sind im Mettelsteg 42 sowie einerseits in der Auskoppelplatte 41 und andererseits in dem Umlenkkopf 43 gasdicht gehalten. Dabei ist ferner Umlenkkopf 43 und Auskoppelplatte 41 über Keramikstäbe 44 mit der Konstruktion 37 verbunden. Auskoppelplatte 41 und Umlenkopf 43 sind wie die Stege 40, 42 und Platten 38, 39 aus Leichtmetall, vorzugsweise Aluminium, gefertigt. Dies ist im Hinblick auf die mechanische Stabilität, die einfache Herstellung sowie die Unempfindlichkeit gegen Laserstreustrahlen bei einem optisch gesteuerten Betrieb (beispielsweise ein Spiegel im Umlenkkopf ist defekt) besonders vorteilhaft. Die Fig. 1 bis 5 offenbaren somit eine Einrichtung zum Laserschneiden mit hohen Laserleistungen unter Verwendung einer herkömmlichen Standardkoordinatenführungsmaschine, wodurch die eingangs gestellte Aufgabe gelöst wird.

**Patentansprüche**

1. Einrichtung zum Bearbeiten, insbesondere Schneiden eines Werkstückes mittels eines Laserstrahles mit einem Lasergenerator, der mittels einer Führungsmachine in zwei Koordinatenrichtungen über dem Werkstück verfahrbar ist, dadurch gekennzeichnet, daß der Lasergenerator als Gastransportlaser (10) ausgebildet und als verfahrbares Bearbeitungswerkzeug an der Führungsmaschine (50) befestigt ist.

2. Einrichtung nach Anspruch 1, dadurch gekennzeichnet, daß der Gastransportlaser (10) in Leichtbauweise ausgebildet ist.

3. Einrichtung nach Anspruch 1 oder 2, dadurch gekennzeichnet, daß das zum Gastransport vorgesehene Rootsgebläse (14) des Gastransportlasers (10) über eine schwingungsgedämpfte Gaskupplung (20) an die Laserentladungsröhren (11, 12) angeschlossen ist.

4. Einrichtung nach Anspruch 3, dadurch gekennzeichnet, daß das Rootsgebläse (14) über Schwingungsdämpfer (32) in dem Lasergehäuse (25) befestigt ist.

## Claims

1. Device for processing and especially cutting a workpiece by means of a laser beam with a laser generator which is movable over the workpiece in two coordinate directions via a guide machine, characterized by the laser generator being designed to be a gas transport laser (10) and being attached to the guide machine (50) as a movable processing tool.

2. Device according claim 1, characterized by the gas transport laser (10) being designed to be of a lightweight construction.

3. Device according claim 1 or 2, characterized by the Root's blower (14) of the gas transport laser (10) which is provided for transporting the gas being connected to the laser discharge tube (11, 12) via a vibration-damped gas coupling (20).

4. Device according claim 3, characterized by the Root's blower (14) being fixed in the laser housing (25) via vibration dampers (32).

## Revendications

1. Installation pour l'usinage, notamment pour le découpage d'une pièce à l'aide d'un rayon laser comportant un générateur laser qui est mobile au-dessus de la pièce suivant deux directions de coordonnées à l'aide d'une machine de guidage, installation caractérisée en ce que le générateur laser est un laser (10) à transfert de gaz et est fixé comme outil d'usinage, mobile, sur la machine de guidage (50).

2. Installation selon la revendication 1, caractérisée en ce que le laser à transfert de gaz (10) est réalisé en construction légère.

3. Installation selon l'une quelconque des revendications 1 et 2, caractérisée en ce que la machine soufflant de de Roots (14) servant à transférer le gaz dans le laser (10) est raccordée aux tubes de décharge (11, 12) du laser par l'intermédiaire de moyens d'accouplement (20) qui amortissent les vibrations.

4. Installation selon la revendication 3, caractérisée en ce que la machine soufflante de Roots (14) est fixée au boîtier (25) du laser par l'intermédiaire d'amortisseurs (32).

0 001 216

# FIG.1

# FIG.3

FIG.2

FIG.4

0001216

**FIG.5**